# EUROPEAN PATENT SPECIFICATION

(11) **EP 0 794 858 B1**
(45) Date of publication and mention of the grant of the patent: **03.04.2002**
(21) Application number: 95937224.4
(22) Date of filing: 01.12.1995
(51) Int. Cl.: B29C 67/00, B29C 65/18, B29B 13/02

(54) **METHOD FOR INTRODUCING SEALING EDGES INTO PANELS OF THERMOPLASTIC MATERIAL, AND AN ASSEMBLY THEREFOR**
VERFAHREN ZUM EINBRINGEN VON VERBINDUNGSRÄNDERN IN KUNSTOFFPANELE UND DABEI ZU VERWENDENDE VORRICHTUNG
PROCEDE POUR INTRODUIRE DES GARNITURES D'ETANCHEITE DANS LES BORDS DE PANNEAUX EN MATERIAU THERMOPLASTIQUE, ET ENSEMBLE PREVU A CET EFFET

(30) Priority: 02.12.1994 NL 9402035
(43) Date of publication of application: 17.09.1997
(73) Proprietor: Shannon B.V., 2292 JC Wateringen (NL)
(72) Inventor: RAPATI, Julianus, Ferdinand, Petrus, NL-2522 EW The Hague (NL)
(74) Representative: Land, Addick Adrianus Gosling
(86) International application number: NL9500409
(87) International publication number: WO9616791

(56) References cited:
- EP-A- 0 083 030
- WO-A-86/05159
- DE-A- 2 619 935
- DE-A- 3 813 104
- FR-A- 1 242 983
- GB-A- 2 039 824
- US-A- 3 911 514

## Description

The present invention relates to thermoplastic material and especially to a method for introducing sealing edges into panels of thermoplastic material and to an assembly therefor.

It is known that panels of thermoplastic material, such as polycarbonate and acrylate are used for insulation in the construction industry. Many sports stadiums for instance, are covered with panels of such thermoplastic material in order to protect the crowd and players against the weather, wherein the game can take place under natural light, due to the transparent nature of such thermoplastic material. Such thermoplastic panels are often covered with a layer of ultraviolet-resistant material, in order to reduce damage due to the sun's rays.

This thermoplastic material is often extruded in the form of panels with spaced apart plates which are held at a distance from each other by spacing means, so called bridge pieces, whereby channels are created which run through the plates. After extrusion, these are cut off at the desired length, either in the factory or at the final destination.

At the moment, the desired length of thermoplastic material is obtained by sawing of the panels. This results in a sharp, uneven sawn edge which is particularly susceptible to temperature changes due to the fact that sawing often results in the introduction of stress cracks in the thermoplastic material, whereby the negative influence of these stress cracks can be increased by temperature changes and by neighboring covering pieces, used in the building industry, in order to cover the ends of the panels. Saw dust can also build up in the plate channels due to the sawing. This build up of undesired saw dust reduces the transparency of the plates and can also function as a concentration point for moisture and condensation which further reduces the transparency and attractiveness of the plates. This saw dust is usually removed in practice, by ionized (pressured) air. After five years for example, the majority of thermoplastic panels produced in this way are no longer transparent. These problems are increased when thermoplastic panels of this type are subjected to everyday weather conditions without the sawn off ends being sealed.

In practice, after a desired length of thermoplastic material has been sawn off, the open ends are sealed off with tape. Due to the resulting sharp sawn edges, this tape can break or tear during maintenance and installation whereby undesirable material can further enter into the plate channels.

An assembly and method for sealing together 2 or more of thermoplastic material separated by spacing means using heatable pressure means to exert heat and pressure on the plate is known from DE-A-3813109. A further assembly is also known from EP-A-0083030.

A problem with these assemblies is however the likelihood of stress cracking when utilising them to introduce seals into panels of thermoplastic material.

An object of the present invention is to obviate at least one of the above problems.

According to a first aspect of the present invention there is provided a method for introducing a seal into a panel, comprising at least two plates of thermoplastic material and spacing means between these plates wherein the method comprises the following steps:
- heating at least one of the plates of thermoplastic material until it becomes soft; and
- subsequently exerting pressure on at least the heated plate in a direction substantially perpendicular to the spacing means, so that the distance between the plates decreases until they contact each other to fuse or flow together in order to form a seal.

Accordingly by fusing together plates in a panel of thermoplastic material, a seal is introduced without having first to saw off the material and subsequently to tape over this sawn over end.

According to a second aspect of the present invention there is provided an assembly for introducing a seal into a panel which comprises at least two plates of thermoplastic material and spacing means between these panels, wherein the assembly comprises heating means for heating at least one of the plates of thermoplastic material and pressure means for exerting pressure on at least the heated plate in a direction substantially perpendicular to the spacing means, so that the distance between the plates decreases until these contact each other and fuse in order to form a seal.

During development of the above mentioned method and assembly according to the present invention, it was found that various stress levels occurred in the thermoplastic material around the introduced seal. These stress levels were dependent on the type of thermoplastic material used.

According to a third aspect of the present invention there is provided a method for minimizing tension near a seal, such as that introduced into a panel of thermoplastic material via the method according to claims 1 and 2 and by an assembly according to claims 3-13, wherein the method comprises the following step:
- pre-warming of the thermoplastic material wherein a seal is to be introduced, before the thermoplastic material is subjected to sealing pressure.

Further characteristics, details and advantages of the present invention will become clear with respect to the following description, which refers to the accompanying figures wherein:
- Figure 1 shows examples of partly cut away perspective views of extruded thermoplastic panels, each with a differing spacing holder/channel design between the oppositely lying panel plates;
- Figure 2 shows a partly cut away perspective view of a first preferred embodiment of the assembly according to the present invention;
- Figures 3 and 4 show schematically the method according to the present invention on using the assembly from Figure 2, in a partly cut away side view;
- Figure 5 shows the method according to the present invention on using a second preferred embodiment of the assembly according to the present invention shown in a partly cut away side view;
- Figure 6 shows a cut away side view of a third preferred embodiment of the assembly according to the present invention during carrying out of the method according to the present invention;
- Figures 7, 8 and 9 show the method according the present invention as carried out by a fourth preferred embodiment of the assembly according to the present invention shown-in a partly cut away perspective side view;
- Figure 10 shows a partly cut away perspective view of a panel of thermoplastic material according to the present invention, wherein the ends are sealed off by a seal, introduced by the assembly and method according to the present invention, wherein these ends are covered by covering pieces which are used in the construction industry;
- Figure 11 shows examples of partly cut away perspective views of different panels of thermoplastic material, each with an introduced seal;
- Figure 12 shows a fifth preferred assembly according to the present invention and Figure 13 shows the introducing of a seal into a panel of thermoplastic material as carried out by the embodiment shown in Figure 12.

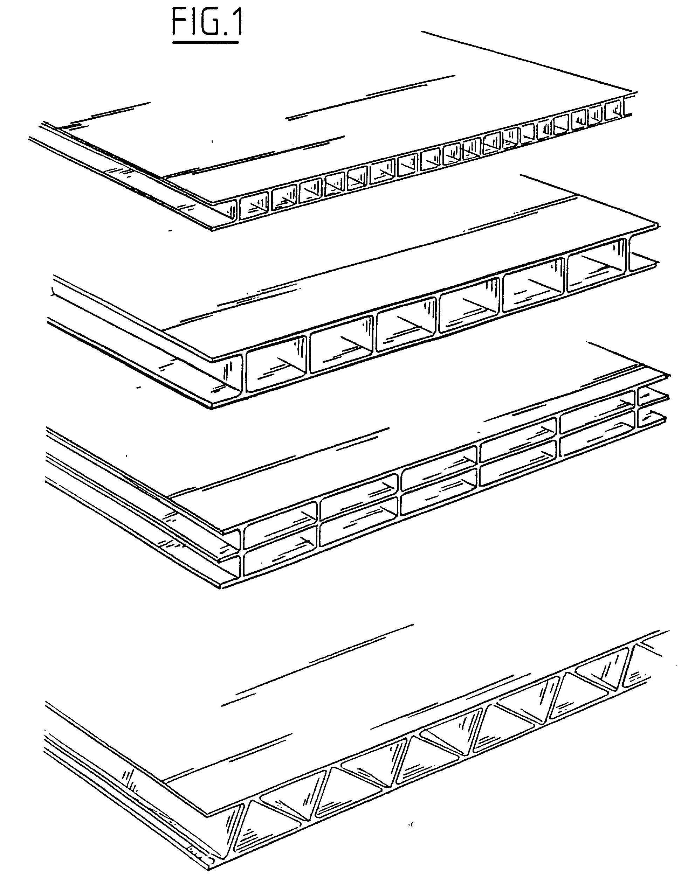

Panels of thermoplastic material which have one or more oppositely lying plates which are held at a distance apart by spacing means which form channels running through the panels, can be extruded in different forms (see Figure 1). The size and form of the panels, spacing means and channels are dependent on the desired insulation.

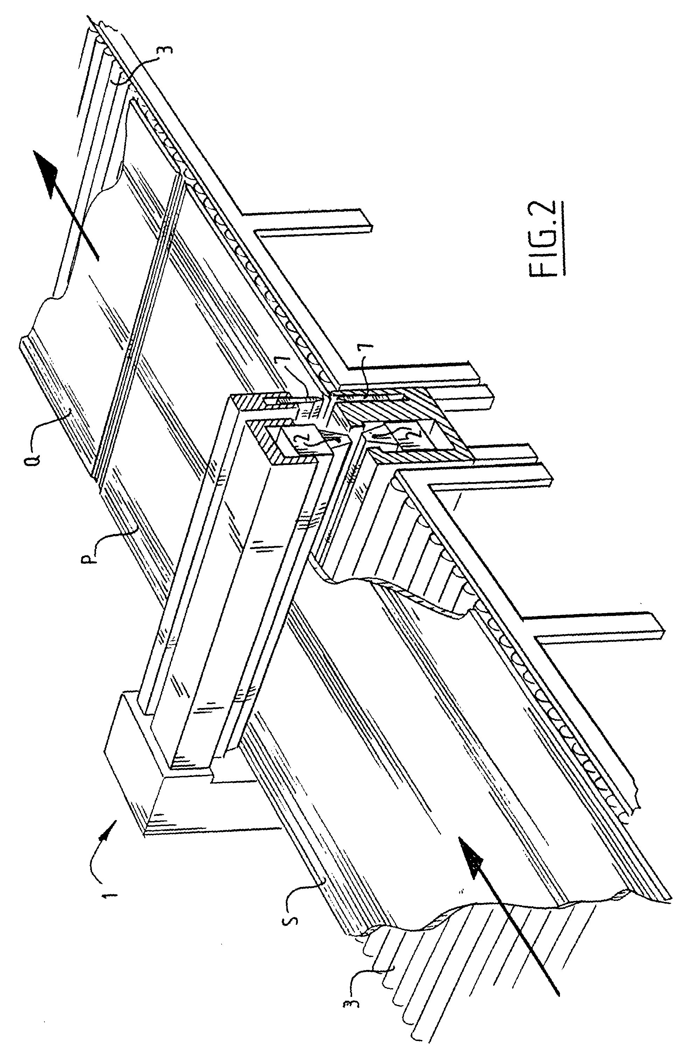

A panel of thermoplastic material S (Figure 1) is guided along a first preferred embodiment of the assembly 1 according to the present invention (Figure 2).

The assembly 1 comprises pressure means preferably in the form of two oppositely lying elements 2, which preferably extend over the whole width of the thermoplastic panels, in order to introduce a seal over the complete breadth of the panel.

Heating means, which are preferably formed by heating elements (not shown), within the pressure elements 2, are enclosed within the assembly 1 of the present invention.

Further heating means which are formed by independent heating elements (independent of the pressure elements 2) can be also-mounted on the assembly 1, preferably for prewarming the thermoplastic panels before they are subjected to the pressure elements 2.

The heating means are preferably controlled by a thermocouple, in order to facilitate control over the method according to the present invention.

The assembly 1, preferably comprises displacing means for displacing of the plates to and from the pressure elements 2, wherein these displacing means are preferably formed by a set of rollers 3 (see Figure 2).

In use, the heating elements mounted in the pressure elements 2, are preferably brought to the desired thermoplastic temperature of the panel.

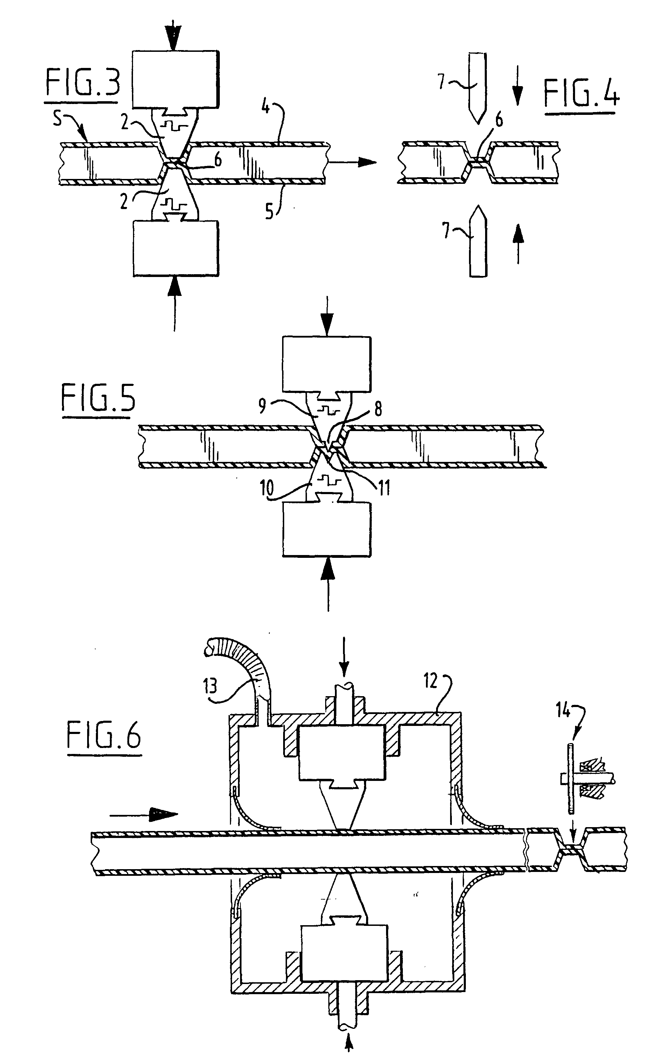

Dependent on the thermoplastic material used, the pressure elements 2 are brought into contact with the panel at a predetermined temperature for a predetermined time until the thermoplastic material is sufficiently soft in order to be sensitive to pressure. Subsequently, the pressure elements 2 are forced inwards, as shown in Figure 3, wherein the oppositely lying plates 4, respectively 5 of the panel are moved towards each other until they come into contact at which point they melt or fuse together to a certain extend in order to form a seal as shown in Figures 3 and 4.

The mounted heating elements are then allowed to cool down, so that the panel also cools down to regain its original hardness, now having a seal 6.

After introduction of the seal 6, the thermoplastic material on either of the thus formed seal 6 are separated by separating means which in the present embodiment of the assembly are preferably formed by two oppositely positioned cutting elements 7, which cut through the seal 6 when these cutting elements 7 are brought together. Accordingly, two panels of thermoplastic material are now formed having sealed ends as shown by the panels P and Q in Figure 2.

The panels are subsequently transported away via the rollers (see Figure 2).

The transportation of the thermoplastic panels to and from the assembly can be carried out manually or automatically via the displacing means.

The pressure elements are preferably V-shaped in cross-section and have such measurements that a seal of preferably 5 mm in cross-section is yielded, as shown in Figure 3, 4, 5 and 6, wherein an easily accessible cutting surface is yielded.

The pressure elements are preferably removable and replaceable by other pressure elements of different shape in order to introduce other desired forms of the seals.

The heating elements, pressure elements and cutting means are preferably coated with a non-stick coating, preferably teflon, in order to minimize undesired sticking of synthetic material thereto, the efficiency and maintenance of the assembly to facilitate and optimize during carrying out of the method according to the present invention.

Since the introduction of a seal in thermoplastic panels via the present invention does not require sawing and/or taping, a saving in manpowers and manhours is yielded, and since sealing and separating can be effectively carried out in the same work place, with the present invention, a saving in work area is yielded. Furthermore, the introduction of a seal in a panel of thermoplastic material via the present invention can be carried out by one man, whilst sawing and taping of extruded panels normally requires three man, wherein processing of a panel according to the present invention takes less time, yields less noise inconvenience and results in no build up of undesirable synthetic material remains and is thereby more efficient. Accordingly the present invention, when compared to the old system, is also financially advantageous.

Since the standard breadth and length of thermoplastic panels in the construction industry is respectively 2 m, 10 cm and 13 m, the assembly according to the present invention is preferably suitable for accommodating such panel measurements. It will however be clear that the assembly can be made suitable for processing thermoplastic panels having various measurements.

A second preferred embodiment of the assembly according to the present invention is shown in Figure 5. With this embodiment the cutting means are formed by a male cutting extension 8 mounted on the upper pressure element 9, and a corresponding, mounted on the lower pressure element 10 female profile 11 in order to cut through the seal at the same time as formation of the seal.

With a third preferred embodiment of the assembly according to the present invention, the thermoplastic panels are situated in a chamber 12 (Figure 6), wherein the pressure elements are mounted. This chamber 12 is heated via a heating tube 13, in order to prewarm the thermoplastic panels, before these are subjected to pressure.

After introduction of the seal in the panel, the seal is severed, in this embodiment, by a rotating saw 14.

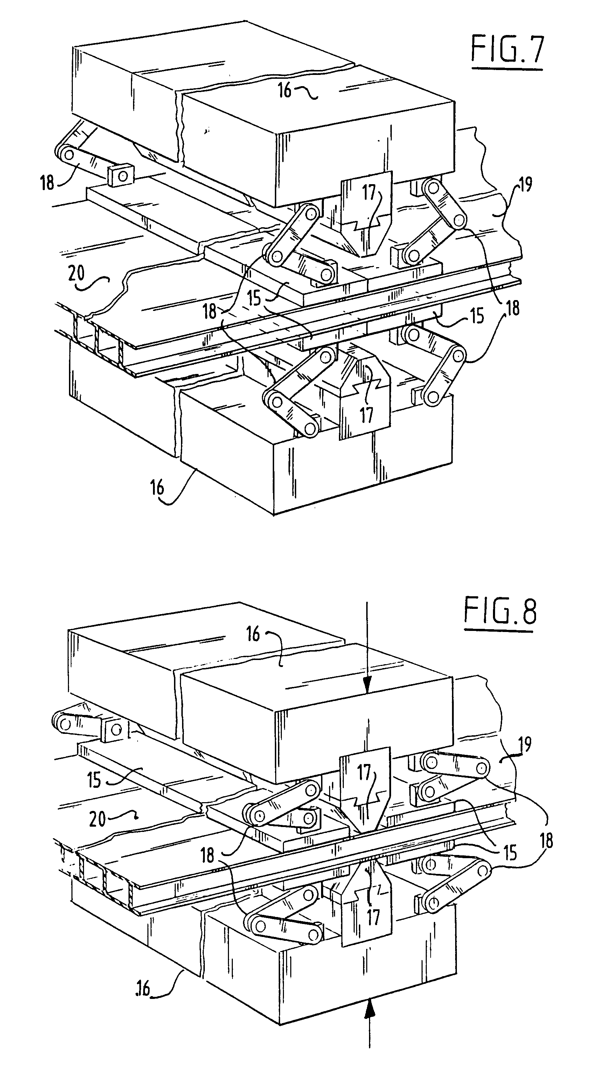

A fourth preferred embodiment of the assembly according to the present invention is shown in Figures 7-9. With this preferred embodiment, four stabilizing elements 15 are preferably joined with the carriers 16 of the pressure elements 17, preferably via four scissor-like hinge elements 18. These stabilizing elements 15 are preferably equipped with heating elements.

When a panel of thermoplastic material is positioned in order to introduce a seal, as in Figure 7, the stabilizing elements 15 can locally prewarm the upper and lower plates 19, 20 of the panel.

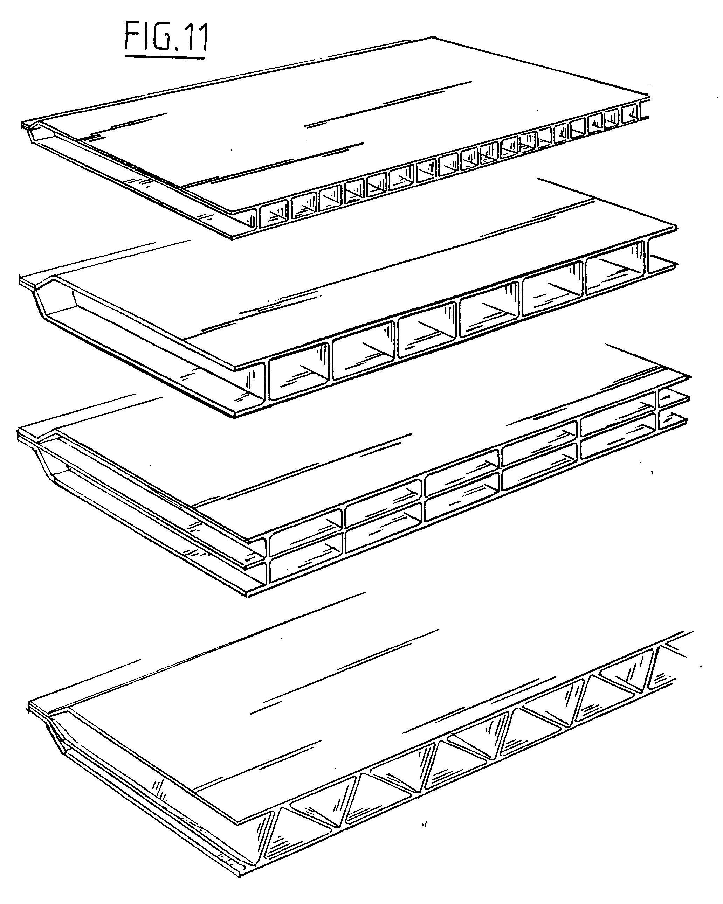

The pressure elements 17 are then automatically or by any other suitable means such as by gravity for example, brought together. As this occurs, the stabilizing elements 15 are pushed apart by the pressure elements 17 (Figure 11), so that the pressure element 17 contact the upper and lower plates 19, 20 of the panel.

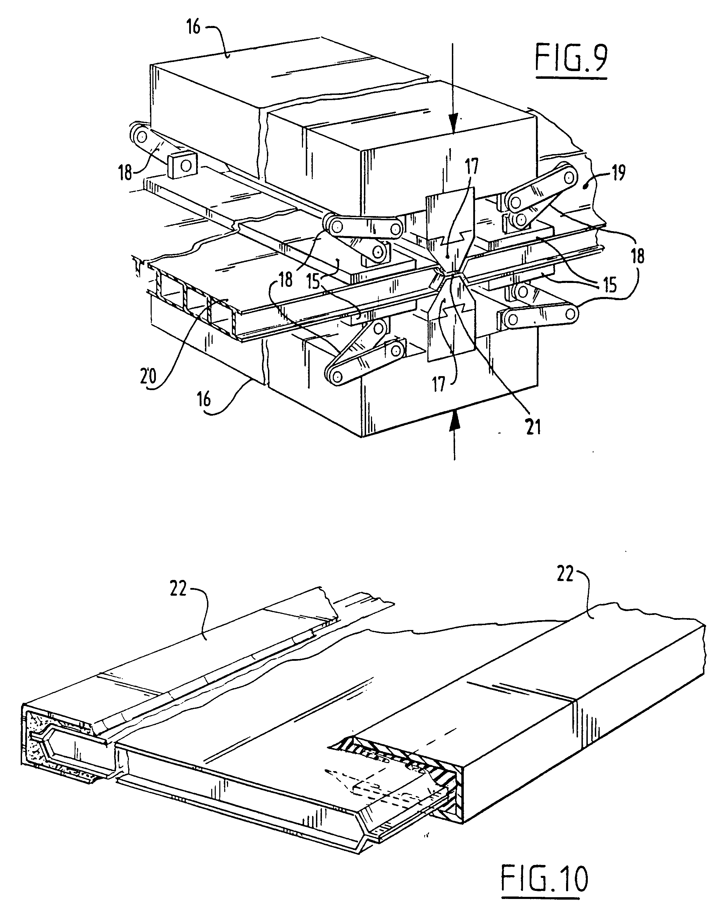

The pressure elements 17 are kept in contact with the plates 19, 20 of the panel, until the thermoplastic temperature is reached. At this point, the seal can be introduced into the panel, by bringing the pressure elements 17 together until the oppositely lying plates 19, 20 of the panel contact each other, whereupon they melt and fuse in order to form a seal 21 (Figure 9).

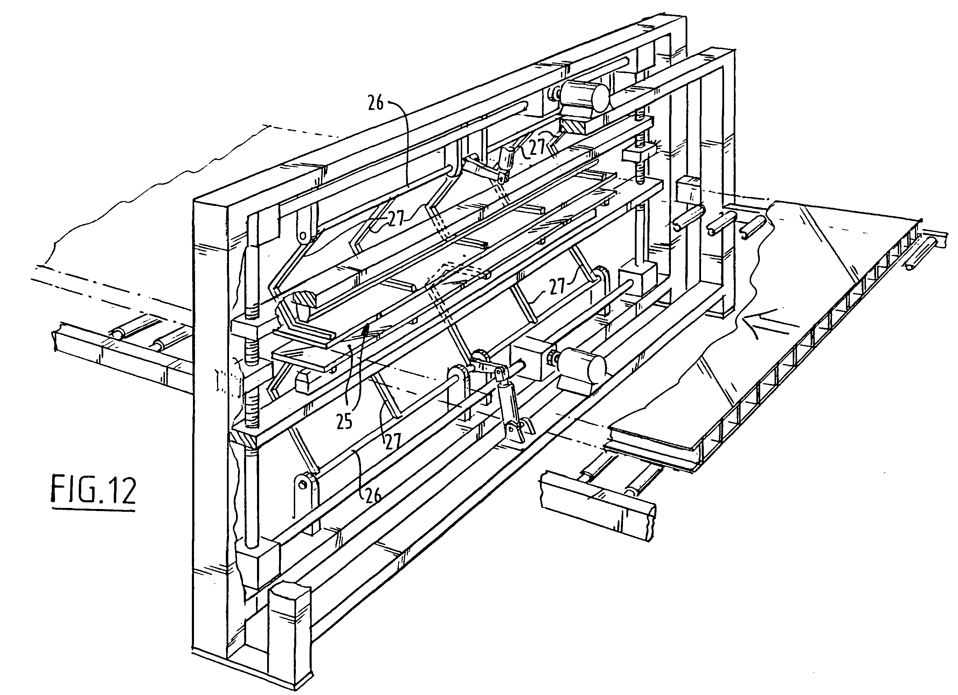

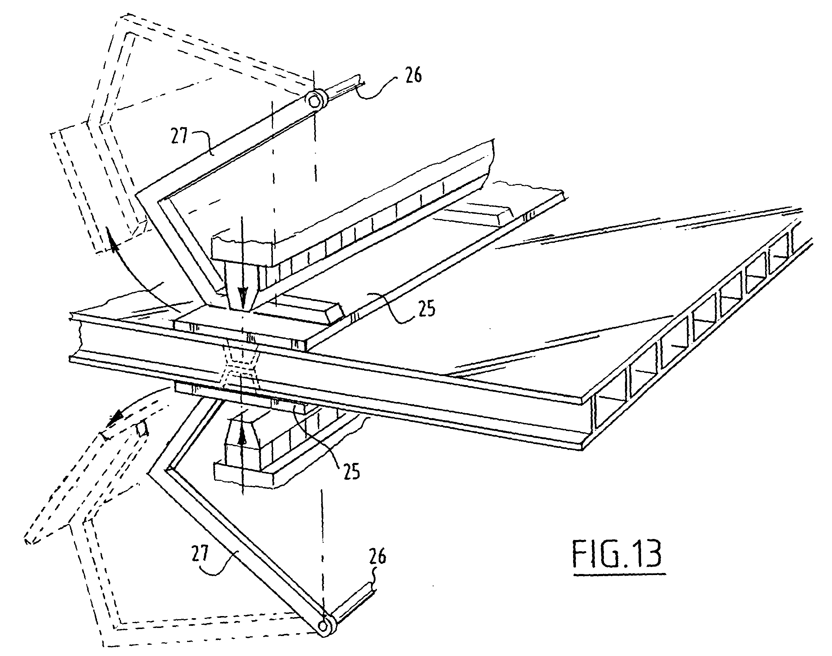

A fifth preferred embodiment of the present invention is shown in Figures 12 and 13. In this embodiment, the stabilizing elements, equipped with heating elements (not shown) are formed by two plates (25) which are brought into contact with a panel of thermoplastic material via rotatable bars 26 whereto the stabilizing elements 25 are joined via connecting arms 27.

With this preferred embodiment, a panel of thermoplastic material is introduced into the assembly, whereupon the stabilizing elements 25 are rotated into place (see Figure 13) whereupon the panel of thermoplastic material can be preheated. Following preheating, the stabilizing elements 25 are rotated away from contacting the surfaces of the thermoplastic panel, whereupon a seal can be introduced into the panel of thermoplastic material as described above.

Prewarming of the thermoplastic material by direct contact with stabilizing and prewarming elements, reduces stress built up in the thermoplastic material and enables the introduction of a seal to be carried out with a great degree of accuracy.

During development of the assembly according to the present invention, consideration was taken of the qualities of different thermoplastic materials, namely the thermoplastic materials polycarbonate and acrylate, two insulation materials which are much used in the construction industry.

Polycarbonate-is stronger and can withstand impact better than acrylate. Acrylate has a lower heat conducting capacity than polycarbonate, which means that polycarbonate requires a shorter warming up and cooling down period than acrylate.

Due to the qualities of polycarbonate, it has been found that local heating to a temperature about 176°C of polycarbonate panels, by the heating elements associated with pressure elements of the assemble according to the present invention, followed by introduction of the seal during a period of about 80 seconds, resulted in the build up of stress around the introduced seal. This stress is increased when end protecting cover elements are placed over the sealed ends of the panel as shown in Figure 10.

In order to reduce the problem of stress build-up in the thermoplastic panels, further research was carried out. Prewarming of an area of the thermoplastic panel before introduction of the seal, appeared to reduce stress around the introduced seal. Stress tests have been carried out on the thermoplastic material, Lexan Thermoclear™, manufactured by the General Electric Plastics Company, Bergen op Zoom, Holland.

The stress build-up in Lexan Thermoclear following introduction of a seal via the present invention, was controlled by the TNP stress test.

TNP is a mixture of toluene and N-propanol in a volume ratio of 1-3 in order to detect stress levels of 10 N/mm² and above.

This mixture was added during three minutes to the examined sample whereafter the sample was visually controlled for breaks and cracks.

### Test

Tests were carried out at differing preheating temperatures wherein an oven was used for preheating of the samples, under differing exposure times, whereafter the samples were processed in an assembly according to the present invention.

The tests were carried out with the heating elements in the pressure elements at a temperature of between 145 and 153°C.

### Results

Introduction of a seal without prewarming, showed stress cracks when the samples were subjected to the TNP solution. Prewarming at 50°C for 30 minutes brought little or no improvement in the stress levels shown.

It appeared however that by prewarming of the Lexan Thermoclear samples to a temperature of 75°C for at least 15 minutes, stress in the panels was clearly reduced.

These results have led to the following preferred processing conditions for polycarbonate and acrylate, when these are processed according to the present invention. For polycarbonate, the plates can be prewarmed to a temperature of about 40-90°C, preferably for 20 seconds at a temperature of about 50°C, before introduction of a seal. The panels are subsequently subjected to the pressure elements having a temperature of about 150°C for about 60 seconds. The subsequent cooling down of polycarbonate takes about 2 seconds, whereafter the introduced seal is preferably cut through with hot cutting elements, in order to further minimize stress.

Acrylate is preferably not preheated. The thermoplastic panel is heated where introduction of the seal is desired. Heating is for example carried out by the stabilizing elements 15 of the preferred embodiment of the assembly according to the present invention as shown in Figures 7-9, or the stabilizing elements 25-26 of the preferred embodiment of the assembly according to the present invention as shown in Figures 12 and 13. The pressure elements are preferably not heated in the case of acrylate, so that these are pushed into the acrylate panels when cold. The cooling off time of acrylate is roughly 25 seconds, whereby it is possible to break the seal with the hand without a greater stress occurring in the sealed panel ends.

It appears that the assembly and method according to the present invention are effective in introducing a seal in panels of different types of thermoplastic material irrespective of the design of these panels, as shown in Figure 11, whereby, after separation along the introduced seal, panels of thermoplastic material are obtained with sealed ends, as shown in Figure 11.

## Claims

1. Assembly for sealing together two or more plates of thermoplastic material separated by spacing means, which plates together form a panel, said assembly comprising:
- two displaceable heating elements (25) arrangeable to dispose on opposite sides of the panel, the heating elements (25) being displaceable between a first non plate contacting position and a second plate contacting position, wherein, in the second contacting position the plates are heatable over a plate contacting surface area of the heating elements (25); and
- separate independently diplaceable pressure means, arrangeable to dispose on opposite sides of the panel, the pressure means being diplaceable to and from each other on either side of the panel for exerting pressure on the heated plates over a plate contacting surface area of the pressure means (17), wherein the plate contacting surface area of the heating elements (25) is greater than the plate contacting surface area of the pressure means (17) when the heating elements (25) occupy the second plate contacting position, and wherein these elements (25) and the pressure means (17) are substantially bisected by the same imaginary plane, which plane is substantially perpendicular to the panel.

2. Assembly according to claim 1, wherein the pressure means comprise a built-in heating element.

3. Assembly according to claims 1 or 2 wherein the pressure means are substantially V shaped in cross-section.

4. Assembly according to any of the previous claims, further comprising separating means for separating the thermoplastic material on both sides of the seal.

5. Assembly according to the claim 4 wherein the separating means are formed by at least one cutting element.

6. Assembly according to claim 5 wherein the heating elements and/or the pressure means and/or the cutting elements are coated with a non-stick coating.

7. Assembly according to any of the previous claims further comprising displacing means for displacing the panel of thermoplastic material to and from the pressure means.

8. Assembly according to claim 7, wherein the displacing means are formed by at least one set of rollers.

9. Method for sealing together two or more plates of thermoplastic material separated by spacing means, which plates together form a panel, the method comprising the following steps:
- heating the plates of thermoplastic material by means of two displaceable heating elements (25) arranged to dispose on opposite sides of the panel, wherein the heating elements (25) are displaceable between a first non plate contacting position and a second plate contacting position, wherein, in this second contacting position the plates are heated over a plate contacting surface area of the heating elements until the plates become soft, and subsequently exerting pressure simultaneously on opposite sides of the panel by means of displaceable pressure means (17) arranged to dispose on opposite sides of the panel to exert pressure on the heated plates over a plate contacting surface area of the pressure means (17) so that the distance between the plates decreases until they contact each other to fuse or flow together in order to form a seal, wherein the surface area of the panels subjected to heating is greater than the surface area of the panels subjected to sealing pressure.

10. Method according to claim 9, wherein the plates of thermoplastic material lying on both sides of the formed seal, are separated.

11. Method according to claims 9 or 10 carried out by the assembly according to any of the claims 1-8.

12. Panel of thermoplastic material, comprising a seal obtainable by the method according to any of the claims 9 - 11.

## Patentansprüche

1. Aufbau zum Zusammenabdichten von zwei oder mehr Platten aus thermoplastischem Material, die durch ein Abstandsmittel getrennt sind, wobei die Platten ein Paneel bilden, wobei der Aufbau aufweist:
zwei verschiebbare Heizelemente (25), die zum Vorsehen auf gegenüberliegenden Seiten des Paneeles angeordnet werden können, wobei die Heizelemente (25) zwischen einer ersten die Platte nicht kontaktierenden Position und einer zweiten die Platte kontaktierenden Position verschiebbar sind, worin in der zweiten kontaktierenden Position die Platten über einer Fläche einer Plattenkontaktoberfläche der Heizelemente (25) erwärmbar sind; und
getrennte unabhängige verschiebbare Druckmittel, die zum Vorsehen auf gegenüberliegende Seiten des Paneeles angeordnet werden können, wobei die Druckmittel zu und von einander auf beiden Seiten des Paneeles zum Ausüben von Druck auf die erwärmten Platten über einer Fläche einer Plattenkontaktoberfläche des Druckmittels (17) verschiebbar sind, worin die Fläche der Plattenkontaktoberfläche der Heizelemente (25) größer ist als die Fläche der Plattenkontaktoberfläche der Druckmittel (17), wenn die Heizelemente die zweite die Platte kontaktierende Position einnehmen, und worin diese Elemente (25) und
die Druckmittel (17) im wesentlichen von der gleichen imaginären Ebene halbiert werden, wobei die Ebene im wesentlichen senkrecht zu dem Paneel steht.

2. Aufbau nach Anspruch 1, bei dem die Druckmittel ein eingebautes Heizelement aufweisen.

3. Aufbau nach Anspruch 1 oder 2, bei dem die Druckmittel im wesentlichen V-förmig im Querschnitt sind.

4. Aufbau nach einem der vorhergehenden Ansprüche, weiter mit einem Trennmittel zum Trennen des thermoplastischen Materiales auf beiden Seiten der Abdichtung.

5. Aufbau nach Anspruch 4, bei dem das Trennmittel von mindestens einem Schneideelement gebildet ist.

6. Aufbau nach Anspruch 5, bei dem die Heizelemente und/oder die Pressmittel und/oder die Schneideelemente mit einer nichthaftenden Beschichtung beschichtet sind.

7. Aufbau nach einem der vorhergehenden Ansprüche, weiter mit einem Verschiebungsmittel zum Verschieben des Paneeles aus thermoplastischem Material zu und von den Pressmitteln.

8. Aufbau nach Anspruch 7, bei dem das Verschiebungsmittel durch mindestens einen Satz von Rollen gebildet ist.

9. Verfahren zum Zusammenabdichten von zwei oder mehr Platten aus thermoplastischem Material, die durch ein Abstandsmittel getrennt sind, wobei die Platten zusammen ein Paneel bilden, wobei das Verfahren die folgenden Schritte aufweist:
- Erwärmen der Platten aus thermoplastischem Material mittels zweier verschiebbarer Heizelemente (25), die zum Vorsehen auf gegenüberliegenden Seiten des Paneeles angeordnet sind,
worin die Heizelemente (25) zwischen einer ersten die Platte nicht kontaktierenden Position und einer zweiten die Platte kontaktierenden Position verschiebbar sind, worin in dieser zweiten kontaktierenden Position die Platten über eine Fläche einer Plattenkontaktoberfläche der Heizelemente erwärmt werden, bis die Platten weich werden, und darauffolgend Druck gleichzeitig auf gegenüberliegende Seiten des Paneeles mittels verschiebbarer Druckmittel (17) ausgeübt wird, die zum Vorsehen auf gegenüberliegenden Seiten des Paneeles angeordnet sind, zum Ausüben von Druck auf die erwärmten Platten über eine Fläche einer Plattenkontaktoberfläche der Druckmittel (17), so daß der Abstand zwischen den Platten abnimmt, bis sie einander zum Verschmelzen oder Zusammenfließen zum Bilden einer Abdichtung kontaktieren,
worin die Fläche der Oberfläche der Paneele, die dem Erwärmen unterliegen, größer als die Fläche der Oberfläche der Paneele ist, die dem Abdichtdruck unterliegen.

10. Verfahren nach Anspruch 9, bei dem die Platten aus thermoplastischem Material, die auf beiden Seiten der gebildeten Abdichtung liegen, getrennt werden.

11. Verfahren nach Anspruch 9 oder 10, das durch den Aufbau nach einem der Ansprüche 1 bis 8 ausgeführt wird.

12. Paneel aus thermoplastischem Material mit einer Abdichtung, die durch das Verfahren nach einem der Ansprüche 9 bis 11 erhältlich ist.

## Revendications

1. Ensemble pour sceller ensemble deux plaques ou plus en matériau thermoplastique séparées par un moyen d'écartement, lesquelles plaques forment ensemble un panneau, ledit ensemble comprenant
- deux éléments chauffants déplaçables (25) pouvant être disposés sur les côtés opposés du panneau, les éléments chauffants (25) étant déplaçables entre une première position sans contact avec la plaque et une seconde position de contact avec la plaque, dans lequel, dans la seconde position de contact, les plaques peuvent être chauffées sur une aire surfacique de contact de plaque des éléments chauffants (25) ; et
- des moyens de pression séparés déplaçables indépendamment, que l'on peut disposer sur les côtés opposés du panneau, les moyens de pression étant déplacables l'un vers l'autre et à l'opposé l'un de l'autre sur chaque côté du panneau pour exercer une pression sur les plaques chauffées sur une aire surfacique de contact de plaque des moyens de pression (17), dans lequel l'aire surfacique de contact de plaque des éléments chauffants (25) est plus grande que l'aire surfacique de contact de plaque des moyens de pression (17) lorsque les éléments chauffants (25) occupent la seconde position de contact de plaque, et dans lequel ces éléments (25) et les moyens de pression (17) sont sensiblement séparés par le même plan imaginaire, lequel plan est sensiblement perpendiculaire au panneau.

2. Ensemble selon la revendication 1, dans lequel les moyens de pression comprennent un élément chauffant incorporé.

3. Ensemble selon la revendication 1 ou 2, dans lequel les moyens de pression sont sensiblement en section transversale en forme de V.

4. Ensemble selon l'une quelconque des revendications précédentes, comprenant, en outre, des moyens de séparation pour séparer le matériau thermoplastique sur les deux côtés du joint.

5. Ensemble selon la revendication 4, dans lequel les moyens de séparation sont formés par au moins un élément de découpe.

6. Ensemble selon la revendication 5, dans lequel les éléments chauffants et/ou les moyens de pression et/ou les éléments de découpe sont revêtus d'un revêtement non-collant.

7. Ensemble selon l'une quelconque des revendications précédentes, comprenant, en outre, un moyen de déplacement pour déplacer le panneau de matériau thermoplastique vers les moyens de pression et à l'opposé de ceux-ci.

8. Ensemble selon la revendication 7, dans lequel les moyens de déplacement sont formés par au moins un jeu de rouleaux.

9. Procédé pour sceller ensemble deux plaques ou plus en matériau thermoplastique séparées par des moyens d'écartement, lesquelles plaques forment ensemble un panneau, le procédé comprenant les étapes consistant à :
- chauffer les plaques de matériau thermoplastique au moyen de deux éléments chauffants déplaçables (25) conçus pour être disposés sur les côtés opposés du panneau, dans lequel les éléments chauffants (25) sont déplaçables entre une première position sans contact avec les plaques et une seconde position de contact avec les plaques, dans lesquelles, dans la seconde position de contact, les plaques sont chauffées sur une aire surfacique de contact de plaques des éléments chauffants jusqu'à ce que les plaques deviennent molles et ultérieurement, exercer une pression simultanément sur les côtés opposés du panneau à l'aide de moyens de pression déplaçables (17) conçus pour être disposés sur les côtés opposés du panneau pour exercer une pression sur les plaques chauffées sur une aire surfacique de contact de plaque des moyens de pression (17) de sorte que la distance entre les plaques diminue jusqu'à ce qu'elles se contactent mutuellement pour fondre ou couler ensemble afin de former un joint d'étanchéité, dans lequel l'aire surfacique des panneaux soumis au chauffage est plus grande que l'aire surfacique des panneaux soumis à la pression d'étanchéité.

10. Procédé selon la revendication 9, dans lequel les plaques de matériau thermoplastique se trouvant sur les deux côtés du joint d'étanchéité formé, sont séparées.

11. Procédé selon la revendication 9 ou 10, réalisé par l'ensemble selon l'une quelconque des revendications 1 à 8.

12. Panneau de matériau thermoplastique, comprenant un joint d'étanchéité que l'on peut obtenir par le procédé selon l'une quelconque des revendications 9 à 11.
